# EUROPÄISCHE PATENTSCHRIFT

(11) **EP 3 216 101 B1**
(45) Veröffentlichungstag und Bekanntmachung des Hinweises auf die Patenterteilung: **08.07.2020**
(21) Anmeldenummer: 15778643.5
(22) Anmeldetag: 08.10.2015
(51) Int. Cl.: H02J 3/38, H04L 12/24, H02J 13/00, H04L 12/12, H04W 40/00, H04W 84/00, H02J 3/00

(54) **VERFAHREN ZUR GEGENSEITIGEN ZUORDNUNG VON NETZKNOTEN EINES NIEDERSPANNUNGSNETZES**
METHOD FOR MUTUALLY ASSIGNING SYSTEM NODES IN A LOW-VOLTAGE POWER SYSTEM
PROCÉDÉ D'ASSOCIATION MUTUELLE DE NOEUDS D'UN RÉSEAU BASSE TENSION

(30) Priorität: 05.11.2014 DE 102014222595
(43) Veröffentlichungstag der Anmeldung: 13.09.2017
(73) Patentinhaber: Siemens Aktiengesellschaft Österreich, 1210 Wien (AT)
(72) Erfinder: EINFALT, Alfred, A-1210 Wien (AT); MOSSHAMMER, Ralf, A-1020 Wien (AT)
(74) Vertreter: Maier, Daniel Oliver
(86) Internationale Anmeldenummer: PCT/EP2015/073259
(87) Internationale Veröffentlichungsnummer: WO 2016/071069

(56) Entgegenhaltungen:
- WO-A1-2013/149899
- DE-A1-102012 221 571
- US-A1- 2014 012 524

## Beschreibung

### GEBIET DER ERFINDUNG

Die vorliegende Erfindung betrifft ein Verfahren zur gegenseitigen Zuordnung von Netzknoten eines Niederspannungsnetzes unter Verwendung von zumindest zwei Messwertreihen.

Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicherweise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400 kVA für ländliche Gebiete und 630 oder 800 kVA für innerstädtische Gebiete.

Der Begriff Niederspannungsnetz im Sinne dieser Erfindung bezeichnet einen Teil des Verteilernetzes, also einen Abschnitt, der von einem bestimmten Ortsnetztransformator mit elektrischer Energie versorgt wird.

Komponenten des Niederspannungsnetzes - und damit Netzknoten - können sein: Stromerzeuger (z.B. Photovoltaikanlagen, Kleinwindkraftanlagen), Speicher (z.B. Batterien, Wärmepumpen), z.B. Ladestationen für Elektrofahrzeuge, flexible Verbraucher (z.B. elektrische Speicherheizungen, Gebäude mit und ohne Gebäudeautomationssystem und entsprechenden Aktoren (= Wandler oder Antriebselemente, setzen elektrische Signale in mechanische Bewegung oder andere physikalische Größen (z. B. Druck oder Temperatur) um)) und Netzbetriebsmittel (Transformatoren, Leitungen, Sicherungen, Messgeräte wie Smart Meter, usw.).

Heutzutage ist der klassische Netzbetrieb durch die zunehmende Durchdringung mit dezentralen, meist erneuerbaren Energieerzeugungsanlagen (DEA) vor große Herausforderungen gestellt. Hinzukommt das steigende Wachstum bzw. die fortschreitende Entwicklung der Elektromobilität, wodurch auch eine verstärkte Notwendigkeit von zusätzlichen Energieübertragungsformen durch die Elektrizität auftritt.

Dahingehend zeigte sich in den letzten Jahren der Trend zu "Smart Grids", sogenannten intelligenten Netzen, welche als Lösung dieser steigenden Herausforderung angesehen werden. Diese intelligenten Stromnetze dienen unter anderem zur kommunikativen Vernetzung und Steuerung von Stromerzeugern, Speichern, elektrischen Verbrauchern und Netzbetriebsmitteln in Energieübertragungs- und Energieverteilungsnetzen der Elektrizitätsversorgung.

Dabei kann die Netzstabilität in Energieübertragungs- und Energieverteilungsnetzen vorwiegend in zwei Problembereiche eingeteilt werden: Das vorherrschende Problem in ländlichen Energieverteilernetzen ist die Spannungserhaltung, das auch als "U-Problem" bezeichnet wird. In urbanen Energieverteilernetzen, die aufgrund der Lastdichte eher geringe Leitungslängen aufweisen, ist weniger die Spannungserhaltung als vielmehr das Problem der Auslastung von Betriebsmitteln vorherrschend. Dies wird auch als "I-Problem" bezeichnet. Dezentrale Einspeiser verringern dabei die hohe Auslastung von Leitungen und Transformatoren. In den seltensten Fällen werden aber auch die Leistungsgrenzen bei der Rückspeisung verletzt. Beim I-Problem ist hingegen auch eine zumindest näherungsweise Kenntnis der jeweiligen Netztopologie unerlässlich.

Darüber hinaus können z.B. in suburbanen Gebieten Netzabschnitte innerhalb eines Netzgebietes sowohl einen ländlichen als auch einen urbanen bzw. städtischen Charakter aufweisen. Um beim letzten Teilnehmer innerhalb eines Netzabschnittes noch die durch Normen (beispielsweise durch die EN50160) vorgegebenen Spannungsgrenzen einzuhalten bzw. die Betriebsmittel nicht zu überlasten, muss entweder ein Netzausbau betrieben oder ein aktives Netzmanagementsystem eingesetzt werden. Letzteres greift gezielt auf Erzeuger, flexible Verbraucher oder auch Speicher im Energieverteilernetz zu, um den Netzbetrieb normgerecht aufrecht zu erhalten.

Basis für den stabilen Betrieb eines solchen aktiven Netzmanagementsystems sind valide Messwerte aus den betroffenen Netzen. Insbesondere wenn keine eigene Kommunikation für die Regelung zur Verfügung steht, sondern Übertragungskanäle wie PLC (Powerline Communications) und GPRS (General Packet Radio Service) verwendet werden, sind Verzögerungen bzw. Verluste von Datenpaketen ein häufiges Phänomen.

Somit stellt eine entsprechende Funktionalität zur Gewährleistung eines stabilen Betriebes eines Netzmanagementsystems bzw. eine gewisse Flexibilität zur sicheren Handhabung bei fehlenden Messdaten eine wesentliche Voraussetzung dar.

US201401252 ist ein Beispiel für den Stand der Technik.

### STAND DER TECHNIK

Zur Schaffung dieser wesentlichen Voraussetzungen wird derzeit aktiv an Regelungskonzepten für Niederspannungsnetze gearbeitet. Da viele Ideen auf Konzepten für höhere Spannungsebenen beruhen, wird in den meisten Projekten von einer Datenübertragung von Messdaten in guter Qualität ausgegangen, was zumeist auch durch einen separaten Übertragungskanal speziell für das Netzmanagementsystem und dessen Komponenten erzielt wird.

Hierbei werden zur Vermeidung des Verlusts oder der Verzögerung von Daten derzeit zwei Lösungsmöglichkeiten in Betracht gezogen:
Bei einem massiven Problem der Kommunikation des Reglers mit Messstellen und aktiven Komponenten wird eine Außerbetriebnahme des Reglers durchgeführt, da die fehlenden Messdaten auf grundlegende Probleme hinweisen und der korrekte Betrieb nicht mehr gewährleistet werden kann.

Bei einer wenig bis mäßig gestörten Übertragung besteht allerdings die Möglichkeit, die fehlenden Daten aufgrund einfacher Regressionen fortzuschreiben, z.B. Verwendung des letzten Werts des Netzknotens, lineare Weiterführung einer bestimmten Anzahl vergangener Werte usw. Im Wesentlichen handelt es sich dabei um ein einfaches lineares Regressionsverfahren, wobei dezentral zumeist keine entsprechenden Datenarchive aufgrund einer zu geringen Rechenleistung für entsprechende mathematische Lösungsalgorithmen zur Verfügung stehen, um Messwerte anlassbezogen fortschreiben zu können.

Topologieinformationen von Niederspannungsnetzen, also die relative Lage der und die elektrische Verbindung zwischen den einzelnen Netzknoten, liegen derzeit nur in Form von Plänen in Papier bzw. in Form eines Geographischen Informationssystems (GIS) vor. Für die Anwendung in einem modellbasierten Netzmanagementsystem müsste eine Übertragung aus einem übergeordneten System erfolgen. Meist werden Topologieänderungen aber auch nicht zeitnah in den Basissystemen aktualisiert, so dass für eine unbestimmte Zeit das Netzmanagementsystem mit einer falschen Topologieinformation arbeitet und keine Möglichkeit hat, dies zu erkennen.

### DARSTELLUNG DER ERFINDUNG

Es ist eine Aufgabe der Erfindung, ein Verfahren anzugeben, mit welchem die Voraussetzungen geschaffen werden, gegebenenfalls fehlende Messwerte von Netzknoten durch die Messwerte anderer Netzknoten ausgleichen zu können.

Diese Aufgabe wird durch ein Verfahren nach Anspruch 1 gelöst.

Die Messwertreihen können vorab dezentral, z.B. in Speichereinheiten bei den einzelnen Netzknoten, abgespeichert werden und erst anschließend einer zentralen Speichereinheit zugeführt werden, welche dann das Vorliegen einer Korrelation untersucht. Oft werden die Messwerte asynchron eintreffen, das heißt, nicht in regelmäßigen zeitlichen Abständen. Zudem werden die Messwerte unterschiedlicher Netzknoten nicht zu gleichen Zeitpunkten bei den dezentralen Speichereinheiten eintreffen. Durch die Speicherung der Messwerte als zeitliche Reihe können später auf einfache Weise jene Daten selektiert werden, die in einem bestimmten Zeitraum angefallen sind, um sie mit den Messwerten anderer Messwertreihen für diesen Zeitraum auf Korrelation zu untersuchen.

Wird eine Korrelation zwischen bestimmten Netzknoten festgestellt, so kann gegebenenfalls bei Ausfall eines dieser Netzknoten das Verhalten eines korrelierenden Netzknotens herangezogen werden, um das Verhalten des ausgefallenen Netzknotens abzuschätzen. Insofern kann vorgesehen sein, dass bei Ausfall von Messwerten eines Netzknotens zeitlich entsprechende (also im gleichen Zeitraum gemessene) Messwerte der Messwertreihe eines korrelierenden Netzknotens herangezogen werden. Die Messwerte des korrelierenden Netzknotens können dazu mit einem - vorab bestimmten - Korrelationskoeffizienten beaufschlagt werden.

Die Dauer des Heranziehens der Messwertreihe eines korrelierenden Netzknotens kann abhängig gemacht werden von der Dauer der bisherigen Korrelation der betroffenen Netzknoten. Wenn eine Korrelation sich etwa als lastabhängig und damit zeitabhängig herausgestellt hat, dann wird die Dauer des Heranziehens der Messwerte des anderen Netzknotens nur für jene Dauer zulässig sein, während der bisher immer eine Korrelation bestanden hat.

Das erfindungsgemäße Verfahren erlaubt es auch, dass zumindest ein Netzknoten anhand der Korrelation einem bestimmten Strang des Niederspannungsnetzes zugeordnet wird. Werden die Messwertreihen in Form von Spannungen bzw. Impedanzen von Störeinflüssen, wie unterschiedliches Lastverhalten, bereinigt und ergeben sich daraus bestimmte Impedanzverhältnisse zwischen Netzknoten, z.B. gleichbleibende Spannungsabstände, dann werden diese Netzknoten dem gleichen Strang angehören.

Zusätzlich (also für den selben Strang) oder alternativ dazu (also für alle Netzknoten) kann vorgesehen werden, dass zumindest einem Netzknoten anhand der Korrelation ein Abstand relativ zu einem anderen Netzknoten des Niederspannungsnetzes zugeordnet wird. Wenn etwa die Spannung bzw. Impedanz im Fall von korrelierenden Netzknoten bei einem Netzknoten höher ist als bei einem anderen Netzknoten, kann darauf geschlossen werden, dass der Netzknoten mit der höheren Spannung näher bei der Transformatorstation des Niederspannungsnetzes liegt als jener mit der niedrigeren Spannung.

Durch die Zuordnung zu einem Strang und/oder die Zuordnung eines Abstandes kann somit die Netztopologie abgeschätzt werden.

Zusätzlich kann durch die fortlaufende Prüfung der Korrelation auch festgestellt werden, ob sich die Netztopologie ändert: hierzu kann vorgesehen sein, dass bei Änderung einer bestehenden Korrelation die Zuordnung eines von der Änderung betroffenen Netzknotens zu anderen vormals korrelierenden Netzknoten aufgehoben wird. Es könnte z.B. sein, dass ein Netzknoten zwar noch in Datenverbindung mit einer zentralen Speichereinheit steht, die der Transformatorstation eines bestimmten Niederspannungsnetzes zugeordnet ist, während der Netzknoten durch eine Umschaltung elektrisch bereits von der Transformatorstation eines anderen, benachbarten Niederspannungsnetzes versorgt wird.

Bei Vorliegen einer Korrelation zwischen zumindest zwei Netzknoten können auch nur Messwertreihen eines dieser Netzknoten zur Regelung oder Überwachung des Niederspannungsnetzes herangezogen werden.

Weil bei den Kommunikationskanälen im Niederspannungsnetz nur eine begrenzte Bandbreite zur Verfügung steht, ist es sinnvoll, nur die notwendigsten Daten zu übertragen, die zur Regelung oder Überwachung notwendig sind. Ein Verfahren zur Auswahl eines repräsentativen Netzpunkts (im Sinne eines Netzknotens bei der gegenständlichen Erfindung) wird etwa in der AT 512 672 A2 gezeigt. Die AT 512 672 A2 offenbart ein Verfahren zur Bestimmung von relevanten Messstellen in einem Niederspannungsnetz, bei welchem Verfahren Messwerte von in dem Niederspannungsnetz angeordneten Messgeräten zusammen mit zugehörigen zeitlichen Informationen in einer Datenbank abgespeichert und im Anschluss mittels selbstlernender Algorithmen Belastungsszenarien ausgesetzt werden, mit deren Hilfe jene Messgeräte im Niederspannungsnetz bestimmt werden, die besonders aussagekräftige Messwerte liefern, wodurch das Verfahren eine automatisierte Messstellenauswahl mit einer optimierten Anzahl von Messstellen zur Netzüberwachung liefert.

Es kann also statt der Messwertreihen mehrerer korrespondierender Netzknoten die Messwertreihe eines dieser Netzknoten, nämlich eines solchen repräsentativen Netzknotens, für die Regelung oder Überwachung des Niederspannungsnetzes verwendet werden. Nötigenfalls können die Messwerte der übrigen korrespondierenden Netzknoten über bekannte Korrelationskoeffizienten berechnet werden.

In der Regel werden die Messwerte der Messwertreihen als Spannungswerte (bzw. daraus abgeleiteten Impedanzwerte) vorliegen. Denkbar wären auch Leistungswerte bzw. Stromwerte von Messungen an ausgewählten Kabeln bzw. Leitungen.

Schließlich betrifft die gegenständliche Erfindung auch ein Computerprogrammprodukt, welches ein Programm umfasst und direkt in einen Speicher eines zentralen Rechners eines Niederspannungsnetzes ladbar ist, mit Programm-Mitteln, um alle Schritte des erfindungsgemäßen Verfahrens auszuführen, wenn das Programm vom zentralen Rechner ausgeführt wird.

Durch die vorliegende Erfindung ergeben sich je nach konkreter Anwendung folgende Vorteile:
Aufgrund der fortschreitenden Weiterentwicklung von Datennetzen entfällt in den meisten Anwendungsszenarien die Notwendigkeit einer manuell auszuführenden Verknüpfung von Datenpunkten, womit der Entwicklungsaufwand stark reduziert werden kann, speziell in üblichen Automatisierungsarchitekturen, beispielsweise dem Geografischem Informationssystem (GIS). Während detaillierte GIS-Informationen, beispielsweise für den Verrechnungsbetrieb, zwingend sind, stellt der operative Betrieb eines Niederspannungsnetzes üblicherweise wesentlich geringere Anforderungen an die Lokalisationsschärfe.

Der Betrieb von Applikationen im "Smart Grid", wie etwa Regelanwendungen oder Überwachungsalgorithmen, kann selbst in ungünstigen Kommunikationsszenarien stabil gehalten werden. Statt einer willkürlichen Methode zur Messwertfortschreibung bei Ausfällen stützt sich das erfindungsgemäße Verfahren auf eine Annäherung an tatsächlich vorhandene Messpunkte und gestaltet sich dabei deutlich einfacher und ressourcenschonender als rechnerisch aufwändige nichtlineare Schätzverfahren, wie neuronale Netze.

### KURZE BESCHREIBUNG DER FIGUREN

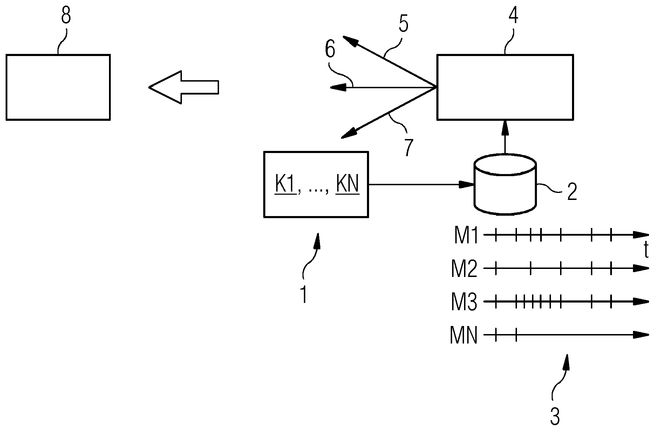

Zur weiteren Erläuterung der Erfindung wird im nachfolgenden Teil der Beschreibung auf die Figur Bezug genommen, aus der weitere vorteilhafte Einzelheiten und mögliche Einsatzgebiete der Erfindung zu entnehmen sind. Dabei zeigt Fig. 1 eine schematische Darstellung des prinzipiellen erfindungsgemäßen Verfahrensablaufes.

### WEGE ZUR AUSFÜHRUNG DER ERFINDUNG

Fig. 1 zeigt überblicksmäßig einen erfindungsgemäßen Ablauf, der auf ein Niederspannungsnetz 1 mit bis zu N Netzknoten K1,...,KN angewendet wird. Asynchron eintreffende Messwerte von zumindest zwei im Niederspannungsnetz 1 angeordneten Netzknoten K1,...,KN werden in einer größenmäßig unbeschränkten Speichereinheit 2 in zeitlichen Reihen 3 abgespeichert. Hier ist pro Netzknoten K1,...,KN jeweils eine Messwertreihe vorgesehen, also für den Netzknoten K1 die Messwertreihe M1, für den Netzknoten K2 die Messwertreihe M2 und so weiter. Die waagrechte Achse entspricht der Zeitachse t, ein senkrechter Strich auf der Zeitachse t steht für einen Messwert, z.B. eine Spannung. Dabei wäre es denkbar, dass ein Messwert tatsächlich Werte mehrerer Messgrößen, z.B. Spannung und Leistung zu einem bestimmten Zeitpunkt, enthält.

Es wäre auch denkbar, dass pro Netzknoten K1,...,KN mehrere voneinander unabhängige Messwertreihen für unterschiedliche Messgrößen vorgesehen werden, z.B. eine Messwertreihe für die Spannung und eine Messwertreihe für die Leistung.

Die Speichereinheit 2 kann aus mehreren dezentralen Speichereinheiten, also etwa lokal bei den einzelnen Netzknoten angeordnet, bestehen und muss nicht zwingend eine einzige physische Speichereinheit sein. In der Speichereinheit 2 werden asynchron eintreffende Messdaten als unbeschränkte Zeitreihen abgespeichert, und können aufgrund der zeitlichen Ordnung einfach abgefragt werden. Angeschlossene Komponenten, wie eben eine Einrichtung 4 mit einem Algorithmus zur Datenanalyse, sind dann in der Lage, an die Speichereinheit 2 spezifische oder allgemeine Anfragen ähnlich wie an eine herkömmliche Datenbank abzusetzen, erweitert um die zusätzliche Dimension der Zeit.

Der Algorithmus zur Datenanalyse der Einrichtung 4 überprüft nun laufend die historischen Messwertreihen (Zeitreihen) um festzustellen, ob Messwertreihen M1,...,MN unterschiedlicher Netzknoten K1,...,KN statistisch signifikante Korrelationen aufweisen, etwa hinsichtlich des Spannungsprofils. Lassen sich über die Korrelationen, bereinigt um die Störeinflüsse unterschiedlichen Lastverhaltens, entsprechende Spannungs- bzw. Impedanzverhältnisse ableiten, so kann eine Clusterung von Netzknoten vorgenommen werden, also die Netzknoten einander zugeordnet werden. Je nach Qualität der Korrelation lassen sich die Netzknoten einzelnen Strängen des Niederspannungsnetzes 1 zuordnen, es kann auch der "elektrische Abstand" von der Transformatorstation festgestellt werden. Solche Informationen über die Topologie des Niederspannungsnetzes 1 werden als Topologieinformation 5 abgespeichert.

Bei Änderung einer bestehenden Korrelation kann die Zuordnung eines von der Änderung betroffenen Netzknotens K1,...,KN zu anderen vormals korrelierenden Netzknoten aufgehoben werden. Somit ist das Verfahren auch zur Detektion etwaiger Topologieänderungen verwendbar, indem Änderungen in der Korrelation ausgewertet werden, wobei eine solche errechnete Änderung der Struktur des Niederspannungsnetzes 1 zur Durchführung einer Änderungsmeldung 7 führt.

Wurden zwei (oder mehr) Netzknoten K1,...,KN einander als korrelierend zugeordnet, so kann bei Ausfall eines Netzknotens des Knotenpaares (oder des Clusters) des Algorithmus der Einrichtung 4 die Messwerte des (der) anderen Netzknoten mit einem bekannten Korrelationskoeffizienten beaufschlagen und somit den ausgefallenen Netzknoten als sogenannten Schattenknoten weiterführen, es erfolgt eine Fortschreibung 6 der Messwerte für diesen Schattenknoten. Wie lange dies zulässig ist, hängt von der Qualität der Korrelation mit dem Partnerknoten (den anderen Knoten des Clusters) zusammen. Wenn die Qualität der Korrelation lastabhängig und damit auch zeitabhängig ist, kann z.B. entschieden werden, dass der Schattenknoten zum Zwecke der Regelung oder Überwachung des Niederspannungsnetzes 1 nur in Zeiträumen zulässig ist, in denen der Schattenknoten auch mit hoher Wahrscheinlichkeit synthetisiert werden kann, also für Zeiträume, wo aufgrund der historischen (zurückliegenden) Messwertreihen von einer ausreichenden Korrelation ausgegangen werden kann.

Aus den aktuellen Messwerten oder auch zusätzlich basierend auf historischen Messwerten könnte auch die Information abgerufen werden, ob ein ausgefallener Netzknoten ein kritischer Netzknoten ist, bei dem also Messwerte nahe oder an der Grenze von zulässigen Messwerten auftreten oder aufgetreten sind, z.B. ein Netzknoten nahe der oder mit minimal oder maximal zulässiger Spannung. Bei solchen kritischen Netzknoten wird die Dauer der Verwendung eines Schattenknotens einzuschränken sein bzw. kürzer sein als bei nicht kritischen Netzknoten.

Die Messwertreihen M1,...,MN bzw. die fortgeschriebenen Werte aus der erfolgten Fortschreibung 6 können an ein Aktorsystem 8 (z.B. den Stufensteller eines Transformators) zur Weiterverarbeitung übermittelt werden, etwa zur Regelung oder Überwachung des Niederspannungsnetzes 1.

Bei Vorliegen einer Korrelation zwischen zumindest zwei Netzknoten K1,...,KN können als weitere vorteilhafte Anwendung der gegenständlichen Erfindung nur Messwertreihen M1,...,MN eines dieser Netzknoten K1,...,KN zur Regelung oder Überwachung des Niederspannungsnetzes herangezogen, also etwa an das Aktorsystem 8 weitergeleitet werden. Wird etwa mit einem Verfahren zur Auswahl eines repräsentativen Netzpunkts gemäß der AT 512 672 A2 ein solcher repräsentativer Netzknoten ausgewählt und fällt dieser dann aus, dann muss ein Ersatz für diesen Netzknoten gefunden werden. Anhand der erfindungsgemäß erstellten historischen Korrelationsinformationen kann dann ein anderer Netzknoten (Messpunkt) als Ersatz ausgewählt werden, insbesondere kann der am besten korrelierende Netzknoten aus eine Menge an korrelierenden Netzknoten ausgewählt werden. Dieser wird dann entsprechend parametriert, also etwa mit einem Korrelationskoeffizienten beaufschlagt, und in der Folge als neuer repräsentativer Netzknoten verwendet.

### Bezugszeichenliste:

- 1: Niederspannungsnetz;
- 2: Speichereinheit;
- 3: zeitliche Reihen von Messwerten
- 4: Einrichtung mit Algorithmus zur Datenanalyse;
- 5: Topologieinformation;
- 6: Fortschreibung der Messwerte;
- 7: Änderungsmeldung;
- 8: Aktorsystem;
- K1,...,KN: Netzknoten 1 bis Netzknoten N;
- M1,...,MN: Messwertreihe von Netzknoten 1 bis Messwertreihe von Netzknoten N;
- t: Zeitachse

## Patentansprüche

1. Verfahren zur gegenseitigen Zuordnung von Netzknoten (K1, ..., KN) eines Niederspannungsnetzes (1) unter Verwendung von zumindest zwei Messwertreihen (M1, ..., MN), wobei, insbesondere asynchron, eintreffende Messwerte von zumindest zwei Netzknoten (K1, ..., KN) in einer Speichereinheit (2) in jeweils einer zeitlichen Reihe (3) pro Netzknoten (K1, ..., KN) abgespeichert werden, wobei die jeweils pro Netzknoten (K1, ..., KN) abgespeicherte zeitliche Reihe (3) als Messwertreihe (M1, ..., MN) ausgestaltet ist, welche aus vom jeweiligen Netzknoten (K1, ..., KN) bei der Speichereinheit (2) eintreffenden und zeitlich geordneten Messwerten besteht, **dadurch gekennzeichnet**
- **dass** die Messreihen (M1, ..., MN) fortlaufend mittels eines Algorithmus zur Datenanalyse auf zumindest eine statistisch signifikante Korrelation zwischen Messwertreihen (M1, ..., MN) unterschiedlicher Netzknoten (K1, ..., KN) geprüft werden, wobei bei statistisch signifikanter Korrelation entsprechende Spannungs- und/oder Impedanzverhältnisse ableitbar sind, und bei Feststellung einer Korrelation die den korrelierenden Messwertreihen (M1, ..., MN) zugehörigen Netzknoten (K1, ..., KN) einander zugeordnet werden,
- **dass** bei Ausfall von Messwerten eines Netzknotens (K1, ..., KN) zeitlich entsprechende Messwerte der Messwertreihe (M1, ..., MN) eines korrelierenden Netzknotens (K1, ..., KN) für eine Fortschreibung herangezogen werden, und
- **dass** die Messwertreihen (M1, ..., MN) und die aus der Fortschreibung stammenden Werte zur Regelung oder Überwachung des Niederspannungsnetzes (1) an ein Aktorensystem (8) weitergeleitet werden.

2. Verfahren nach Anspruch 1, **dadurch gekennzeichnet, dass** die Messwerte des korrelierenden Netzknotens (K1, ..., KN) dazu mit einem Korrelationskoeffizienten beaufschlagt werden.

3. Verfahren nach Anspruch 1 oder 2, **dadurch gekennzeichnet, dass** die Dauer des Heranziehens der Messwertreihe (M1, ..., MN) eines korrelierenden Netzknotens (K1, ..., KN) abhängig ist von der Dauer der bisherigen Korrelation der betroffenen Netzknoten.

4. Verfahren nach einem der Ansprüche 1 bis 3, **dadurch gekennzeichnet, dass** zumindest ein Netzknoten anhand der Korrelation einem bestimmten Strang des Niederspannungsnetzes (1) zugeordnet wird.

5. Verfahren nach einem der Ansprüche 1 bis 4, **dadurch gekennzeichnet, dass** zumindest einem Netzknoten anhand der Korrelation ein Abstand relativ zu einem anderen Netzknoten des Niederspannungsnetzes (1) zugeordnet wird.

6. Verfahren nach einem der Ansprüche 1 bis 5, **dadurch gekennzeichnet, dass** bei Änderung einer bestehenden Korrelation die Zuordnung eines von der Änderung betroffenen Netzknotens (K1, ..., KN) zu anderen vormals korrelierenden Netzknoten aufgehoben wird.

7. Verfahren nach einem der Ansprüche 1 bis 6, **dadurch gekennzeichnet, dass** bei Vorliegen einer Korrelation zwischen zumindest zwei Netzknoten (K1, ..., KN) nur Messwertreihen (M1, ..., MN) eines dieser Netzknoten (K1, ..., KN) zur Regelung oder Überwachung des Niederspannungsnetzes (1) herangezogen werden.

8. Verfahren nach einem der Ansprüche 1 bis 7, **dadurch gekennzeichnet, dass** die Messwerte als Spannungswerte vorliegen.

9. Computerprogrammprodukt, welches ein Programm umfasst und direkt in einen Speicher eines zentralen Rechners eines Niederspannungsnetzes ladbar ist, mit Programm-Mitteln, um alle Schritte des Verfahrens nach einem der Ansprüche 1 bis 8 auszuführen, wenn das Programm vom zentralen Rechner ausgeführt wird.

## Claims

1. Method for mutually assigning system nodes (K1, ..., KN) in a low-voltage network (1) using at least two series of measured values (M1, ..., MN), wherein, in particular asynchronous, incoming measured values of at least two system nodes (K1, ..., KN) are stored in a storage unit (2) in respectively one temporal series (3) per system node (K1, ..., KN), wherein the temporal series (3) stored respectively per system node (K1, ..., KN) is designed as a series of measured values (M1, ..., MN) which consist of measured values incoming from the respective system node (K1, ..., KN) in the storage unit (2) and of temporally ordered measured values, **characterised in that**
- the series of measurements (M1, ..., MN) are checked continuously by means of an algorithm for data analysis for at least one statistically significant correlation between series of measured values (M1, ..., MN) of different system nodes (K1, ..., KN), wherein with a statistically significant correlation, corresponding voltage and/or impedance ratios can be derived, and when a correlation is determined, the system nodes (K1, ..., KN) assigned to the correlating series of measured values (M1, .., MN) are assigned to one another,
- if measured values of a system node (K1, ..., KN) fail, temporally corresponding measured values of the series of measured values (M1, ..., MN) of a correlating system node (K1, ..., KN) are used for an update, and
- that the series of measured values (M1, ..., MN) and the values originating from the extrapolation are forwarded to an actuator system (8) for regulating or monitoring the low voltage network (1).

2. Method according to claim 1, **characterised in that** the measured values of the correlating system node (K1, ..., KN) are applied with a correlation coefficient.

3. Method according to claim 1 or 2, **characterised in that** the duration of the use of the series of measured values (M1, ..., MN) of a correlating system node (K1, ..., KN) is dependent on the duration of the previous correlation of the affected system nodes.

4. Method according to one of claims 1 to 3, **characterised in that** at least one system node is assigned to a specific line in the low voltage network (1) on the basis of the correlation.

5. Method according to one of claims 1 to 4, **characterised in that** a distance relative to another system node of the low voltage network (1) is assigned to at least one system node on the basis of the correlation.

6. Method according to one of claims 1 to 5, **characterised in that** with a change in an existing correlation, the assignment of one system node (K1, ..., KN) affected by the change to another formerly correlating system node is cancelled.

7. Method according to one of claims 1 to 6, **characterised in that** if there is a correlation between at least two system nodes (K1, ..., KN) only series of measured values (M1, ..., MN) of one of these system nodes (K1, ..., KN) is used to regulate or monitor the low voltage network (1).

8. Method according to one of claims 1 to 7, **characterised in that** the measured values are present as voltage values.

9. Computer program product, which comprises a program and can be loaded directly into a memory of a central computer of a low voltage system, having program means, in order to carry out all steps of the method according to one of claims 1 to 8, if the program is executed by the central computer.

## Revendications

1. Procédé d'association réciproque de nœuds de réseau (K1, ..., KN) d'un réseau basse tension (1) moyennant l'utilisation d'au moins deux séries de valeurs de mesure (M1, ..., MN), des valeurs de mesure d'au moins deux nœuds de réseau (K1, ..., KN) qui arrivent étant sauvegardées en particulier de manière asynchrone dans une unité de mémoire (2) respectivement dans une série temporelle (3) par nœud de réseau (K1, ..., KN), la série temporelle (3) sauvegardée respectivement pour chaque nœud de réseau (K1, ..., KN) étant conçue en tant que série de valeurs de mesure (M1, ..., MN) qui se compose de valeurs de mesure ordonnées dans le temps et arrivant du nœud de réseau respectif (K1, ..., KN) à l'unité de mémoire (2), **caractérisé en ce que** :
- les séries de mesures (M1, ..., MN) sont contrôlées continuellement au moyen d'un algorithme d'analyse de données quant à au moins une corrélation statistiquement significative entre séries de valeurs de mesure (M1, ..., MN) de différents nœuds de réseau (K1, ..., KN), en cas de corrélation statistiquement significative pouvant être dérivés des rapports de tension et/ou d'impédance correspondants et, en cas de constatation d'une corrélation, les nœuds de réseau (K1, ..., KN) associés aux séries de valeurs de mesure (M1, ..., MN) en corrélation étant associés entre eux,
- en l'absence de valeurs de mesure d'un nœud de réseau (K1, ..., KN), il est fait appel à des valeurs de mesure correspondantes dans le temps de la série de valeurs de mesure (M1, ..., MN) d'un nœud de réseau (K1, ..., KN) en corrélation pour une mise à jour et
- les séries de valeurs de mesure (M1, ..., MN) et/ou les valeurs issues de la mise à jour étant retransmises à un système de capteurs (8) pour le réglage ou la surveillance du réseau basse tension (1).

2. Procédé selon la revendication 1, **caractérisé en ce qu'**un coefficient de corrélation est ajouté aux valeurs de mesure du nœud de réseau (K1, ..., KN) en corrélation.

3. Procédé selon la revendication 1 ou 2, **caractérisé en ce que** la durée pendant laquelle il est fait appel à la série de valeurs de mesure (M1, ..., MN) d'un nœud de réseau en corrélation (K1, ..., KN) dépend de la durée de la corrélation actuelle des nœuds de réseau concernés.

4. Procédé selon l'une des revendications 1 à 3, **caractérisé en ce qu'**au moins un nœud de réseau est associé, à l'aide de la corrélation, à une branche déterminée du réseau basse tension (1).

5. Procédé selon l'une des revendications 1 à 4, **caractérisé en ce qu'**est associée à au moins un nœud de réseau, à l'aide de la corrélation, une distance relativement à un autre nœud de réseau du réseau basse tension (1).

6. Procédé selon l'une des revendications 1 à 5, **caractérisé en ce que**, en cas de modification d'une corrélation existante, l'association d'un nœud de réseau (K1, ..., KN) concerné par la modification à d'autres nœuds de réseau auparavant en corrélation est annulée.

7. Procédé selon l'une des revendications 1 à 6, **caractérisé en ce que**, en présence d'une corrélation entre au moins deux nœuds de réseau (K1, ..., KN), il est uniquement fait appel à des séries de valeurs de mesure (M1, ..., MN) d'un de ces nœuds de réseau (K1, ..., KN) pour le réglage ou la surveillance du réseau basse tension (1).

8. Procédé selon l'une des revendications 1 à 7, **caractérisé en ce que** les valeurs de mesure sont données en tant que valeurs de tension.

9. Produit de programme informatique qui comprend un programme et peut être chargé directement dans une mémoire d'un ordinateur central d'un réseau basse tension, avec des moyens de programme pour exécuter toutes les étapes du procédé selon l'une des revendications 1 à 8 lorsque le programme est exécuté par l'ordinateur central.
